# FASCICULE DE BREVET EUROPEEN

(11) **EP 0 961 721 B1**
(45) Date de publication et mention de la délivrance du brevet: **09.02.2005**
(21) Numéro de dépôt: 97951275.3
(22) Date de dépôt: 09.12.1997
(51) Int. Cl.: B60T 13/567, B60T 7/06, B60R 21/09

(54) **DISPOSITIF DE FREINAGE A ZONE DE FRAGILITE CONTROLEE**
BREMSVORRICHTUNG MIT ZONE VON KONTROLIERTER ZERBRECHLICHKEIT
BRAKE DEVICE WITH CONTROLLED BRITTLE ZONE

(30) Priorité: 28.02.1997 FR 9702393
(43) Date de publication de la demande: 08.12.1999
(73) Titulaire: Bosch Systemes de Freinage, 93700 Drancy (FR)
(72) Inventeur: VERBO, Ulysse, F-93600 Aulnay-sous-Bois (FR); LEBOISNE, Cédric, F-75012 Paris (FR)
(86) Numéro de dépôt international: PCT/FR1997/002234
(87) Numéro de publication internationale: WO 1998/038070

(56) Documents cités:
- EP-A- 0 383 050

## Description

La présente invention concerne un dispositif de freinage composé d'un maître-cylindre et d'un servomoteur pneumatique d'assistance, le servomoteur comprenant notamment : une enveloppe rigide; une cloison mobile délimitant au moins une chambre avant et une chambre arrière, de façon étanche, à l'intérieur de l'enveloppe; un clapet à trois voies actionnable par une tige de commande, pour admettre sélectivement des pressions différentes dans les chambres avant et arrière et soumettre corrélativement la cloison mobile à une force d'assistance agissant suivant une première direction axiale pointant vers le maître-cylindre; et une tige de poussée reliée à la cloison mobile pour actionner le maître-cylindre, l'enveloppe comprenant une coquille avant solidaire du maître-cylindre et formant paroi pour la chambre avant, et une coquille arrière formant paroi pour la chambre arrière.

Des dispositifs de ce type sont bien connus dans l'art antérieur, tel que représenté par exemple par le document de brevet EP-0 664 752.

Au cours de la dernière décennie, l'accroissement des normes de sécurité a révélé l'utilité de faire évoluer les dispositifs de freinage des véhicules à moteur, et en particulier les servomoteurs, d'une façon telle qu'un choc frontal ou oblique appliqué au véhicule ne puisse pas facilement être transmis à la jambe du conducteur, même lorsque le choc intervient alors que le conducteur appuie de tout son poids sur la pédale de frein.

De nombreuses solutions ont été développées pour résoudre ce problème, et dont beaucoup s'avèrent très satisfaisantes dans un certain nombre de cas.

Il reste néanmoins que le dispositif de freinage d'un véhicule est toujours installé dans le compartiment moteur de celui-ci et que l'aménagement interne du compartiment moteur d'un véhicule est toujours pratiquement spécifique à ce dernier, de sorte qu'une solution utilisable avec succès sur un véhicule donné peut s'avérer dépourvue de tout effet positif pour un autre véhicule.

L'invention se situe dans ce contexte et a pour but de proposer une nouvelle solution, susceptible de limiter de façon satisfaisante la transmission d'un choc frontal ou oblique dans des configurations où les solutions connues s'avèrent insuffisamment efficaces.

A cette fin, le dispositif de l'invention est essentiellement caractérisé en ce que la coquille avant du servomoteur comprend une partie périphérique, de plus grand diamètre relatif, rendue solidaire de la coquille arrière, et une partie centrale, de plus petit diamètre relatif, rendue solidaire du maître-cylindre, en ce que les parties périphérique et centrale se recouvrent dans une zone de recouvrement annulaire, et en ce que, dans la zone de recouvrement, la partie périphérique se trouve au moins localement plus avancée que la partie centrale suivant la première direction axiale.

Grâce à cet arrangement, les deux parties de la coquille avant du servomoteur peuvent, en cas de choc, se désolidariser l'une de l'autre sans transmettre d'effort important vers le conducteur, la désolidarisation de ces deux parties assurant même une fonction d'absorption d'énergie cinétique.

Selon un mode de réalisation possible de l'invention, les parties centrale et périphérique sont localement rendues solidaires l'une de l'autre, de manière non uniforme, dans la zone de recouvrement.

Par exemple, les parties centrale et périphérique peuvent être collées ou soudées l'une à l'autre par points, les points de collage ou de soudure étant inégalement répartis dans la zone de recouvrement pour faire apparaître une zone de liaison privilégiée, définie par une densité de points de collage ou de soudure relativement élevée, et une zone de rupture privilégiée, définie par une densité de points de collage ou de soudure relativement basse.

Selon une disposition avantageuse, la partie centrale peut en outre être emboîtée, dans la zone de recouvrement, dans un repli de la partie périphérique.

Dans ce dernier cas, et pour un servomoteur dont la cloison mobile présente un rebord circulaire, le repli de la partie périphérique est de préférence conformé pour permettre à la partie centrale d'accueillir, dans la zone de recouvrement, le rebord de la cloison mobile.

Le diamètre de la partie centrale peut aussi être choisi comme étant au plus égal à la moitié du diamètre de la partie périphérique, pour faciliter la désolidarisation de ces deux parties en cas de choc oblique ou latéral.

Dans ce dernier cas, la partie centrale peut en outre présenter une épaisseur supérieure à celle de la partie périphérique pour pouvoir jouer le rôle de renfort.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en coupe partielle d'un dispositif de freinage conforme à l'invention, illustrant une première variante d'exécution;
- La figure 2 est une vue en coupe partielle d'un dispositif de freinage conforme à l'invention, illustrant une seconde variante d'exécution;
- La figure 3 est une vue en coupe partielle d'un dispositif de freinage conforme à l'invention, illustrant une troisième variante d'exécution.

Comme le montrent ces figures, l'invention concerne un dispositif de freinage composé d'un maître-cylindre 1 et d'un servomoteur pneumatique d'assistance 2.

Le fonctionnement de ces dispositifs étant bien connu de l'homme de l'art depuis de décennies et notamment rappelé dans le document de brevet EP-0 664 752 précité, la présente description se bornera à préciser la structure du servomoteur auquel l'invention est applicable.

Le servomoteur 2 comprend notamment : une enveloppe rigide 3; une cloison mobile 4 délimitant, de façon étanche, une chambre avant 5 et une chambre arrière 6, à l'intérieur de l'enveloppe 3; un clapet à trois voies 7 actionnable par une tige de commande 8, pour admettre sélectivement des pressions différentes dans les chambres avant 5 et arrière 6 et pour soumettre corrélativement la cloison mobile 4 à une force d'assistance agissant suivant une première direction axiale X pointant vers le maître-cylindre 1; et une tige de poussée 9 reliée à la cloison mobile 4, pour actionner le maître-cylindre 1.

L'enveloppe rigide 3 comprend elle-même une coquille avant 31 solidaire du maître-cylindre 1 et formant paroi pour la chambre avant 5, et une coquille arrière 32 formant paroi pour la chambre arrière 6.

Selon l'invention, la coquille avant 31 comprend une partie périphérique 311, de plus grand diamètre relatif D1, rendue solidaire de la coquille arrière 32 par exempte par sertissage, et une partie centrale 312, de plus petit diamètre relatif D2, rendue solidaire du maître-cylindre 1 par exemple au moyen de vis telles que 10.

Par ailleurs, les parties périphérique 311 et centrale 312 se recouvrent dans une zone de recouvrement annulaire 313, dans laquelle la partie périphérique 311 se trouve au moins localement plus avancée que la partie centrale 312 suivant la première direction axiale X.

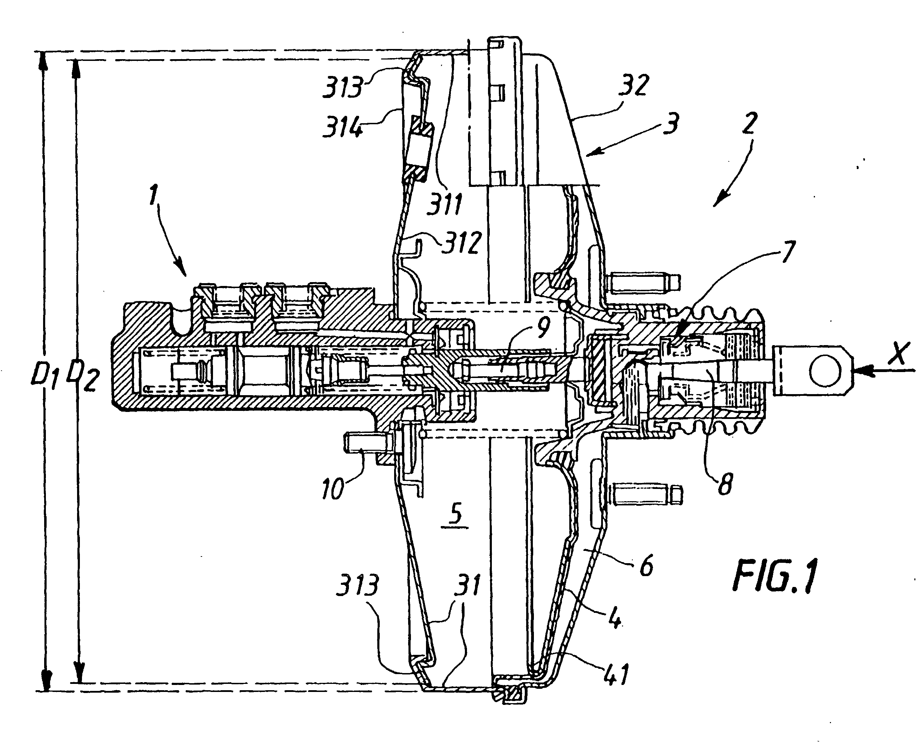

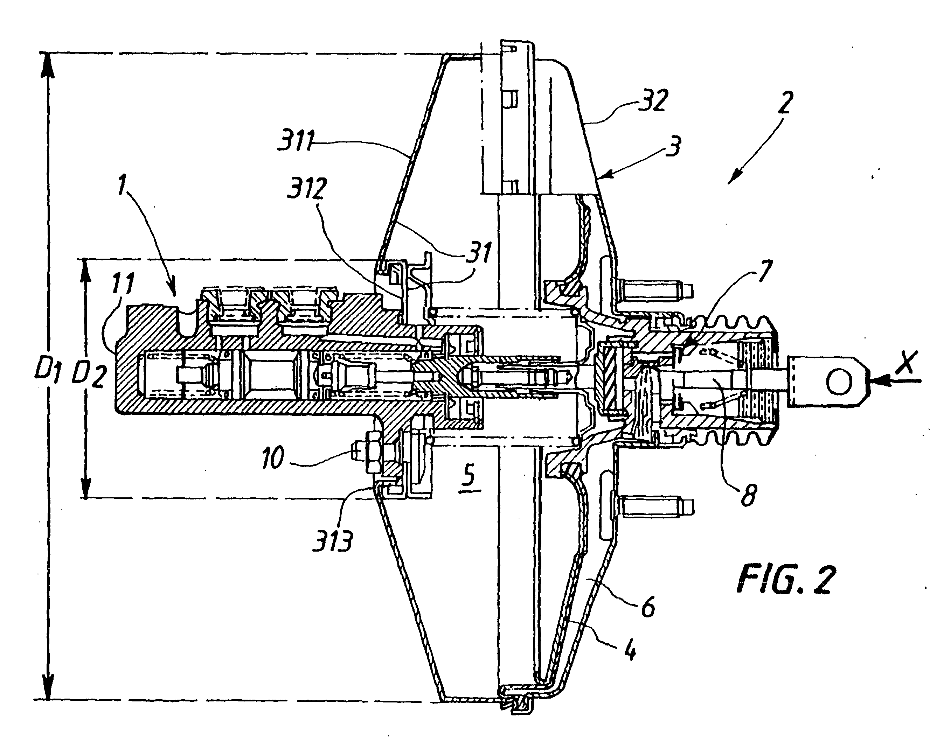

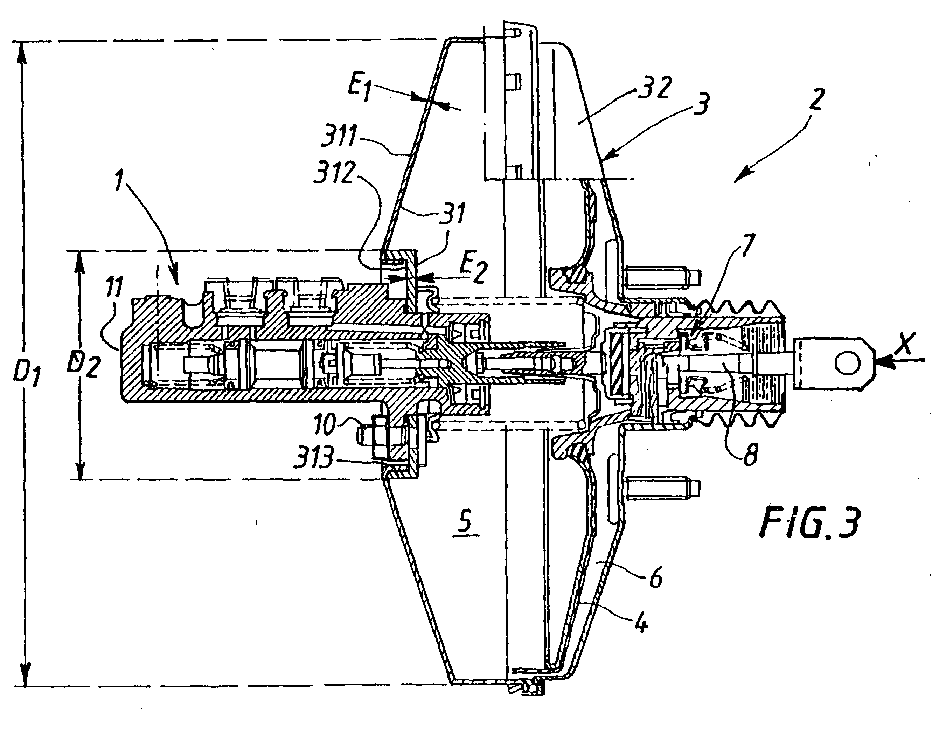

Les parties centrale et périphérique peuvent, dans la zone de recouvrement 313, être solidarisées l'une à l'autre par tout moyen approprié, tel que collage (figures 1 et 3), sertissage (figure 2), soudure, serrage, etc.

Néanmoins, il peut être avantageux de prévoir que les parties centrale et périphérique soient localement rendues solidaires l'une de l'autre de manière non uniforme dans la zone de recouvrement.

Par exemple, les parties centrale et périphérique peuvent être collées ou soudées l'une à l'autre par points, les points de collage ou de soudure étant inégalement répartis dans la zone de recouvrement pour faire apparaître une zone de liaison privilégiée, définie par une densité de points de collage ou de soudure relativement élevée, et une zone de rupture privilégiée, définie par une densité de points de collage ou de soudure relativement basse.

Il est également possible de coller les parties centrale et périphérique par un trait de colle continu mais de largeur variable (figures 1 et 3).

Dans le cas où la solidarisation des parties centrale et périphérique est effectuée par points, et donc discontinue, un joint annulaire peut être placé entre elles, dans la zone de recouvrement, pour garantir l'étanchéité de l'enveloppe 3.

Comme le montre la figure 1, la partie centrale 312 peut en outre être emboîtée, dans la zone de recouvrement 313, dans un repli 314 de la partie périphérique 311.

Dans ce cas, si la cloison mobile 4 présente un rebord circulaire tel que 41, il est très avantageux de prévoir que le repli 314 de la partie périphérique soit conformé pour permettre à la partie centrale d'accueillir, dans la zone de recouvrement, le rebord 41 de la cloison mobile lorsque cette cloison est au bout de sa course dans la direction X, un tel arrangement permettant d'optimiser la longueur de cette course pour un encombrement axial donné du servomoteur.

Pour une efficacité maximale de protection aux chocs, et en particulier aux chocs obliques, il peut être utile de prévoir, comme le montrent les figures 2 et 3, que le diamètre D2 de la partie centrale soit au plus égal à la moitié du diamètre D1 de la partie périphérique, afin de réduire la valeur du couple de torsion qu'il est nécessaire d'appliquer à l'extrémité 11 du maître-cylindre pour provoquer la désolidarisation des partie centrale et périphérique.

Dans ce cas, il peut être également avantageux, comme le montre la figure 3, de donner à la partie centrale 312 une épaisseur E2 sensiblement supérieure à l'épaisseur E1 de la partie périphérique 311, la partie centrale pouvant ainsi jouer le rôle d'un renfort et permettant de se dispenser de la présence de la pièce supplémentaire qui assure normalement cette fonction.

## Revendications

1. Dispositif de freinage composé d'un maître-cylindre (1) et d'un servomoteur pneumatique d'assistance (2), le servomoteur comprenant notamment : une enveloppe rigide (3); une cloison mobile (4) délimitant au moins une chambre avant (5) et une chambre arrière (6), de façon étanche, à l'intérieur de l'enveloppe; un clapet à trois voies (7) actionnable par une tige de commande (8), pour admettre sélectivement des pressions différentes dans les chambres avant et arrière et soumettre corrélativement la cloison mobile à une force d'assistance agissant suivant une première direction axiale (X) pointant vers le maître-cylindre (1); et une tige de poussée (9) reliée à la cloison mobile, pour actionner le maître-cylindre, l'enveloppe comprenant une coquille avant (31) solidaire du maître-cylindre et formant paroi pour la chambre avant, et une coquille arrière (32) formant paroi pour la chambre arrière, **caractérisé en ce que** la coquille avant (31) comprend une partie périphérique (311), de plus grand diamètre relatif (D1), rendue solidaire de la coquille arrière (32), et une partie centrale (312), de plus petit diamètre relatif (D2), rendue solidaire du maître-cylindre (1), **en ce que** les parties périphérique (311) et centrale (312) se recouvrent dans une zone de recouvrement. annulaire (313), et **en ce que**, dans la zone de recouvrement, la partie périphérique (311) se trouve au moins localement plus avancée que la partie centrale (312) suivant la première direction axiale (X).

2. Dispositif de freinage suivant la revendication 1, **caractérisé en ce que** les parties centrale (312) et périphérique (311) sont localement rendues solidaires l'une de l'autre, de manière non uniforme, dans la zone de recouvrement (313).

3. Dispositif de freinage suivant l'une quelconque des revendications 1 et 2, **caractérisé en ce que**, dans la zone de recouvrement (313), la partie centrale (312) est emboîtée dans un repli (314) de la partie périphérique (311).

4. Dispositif de freinage suivant la revendication 3, dans lequel la cloison mobile (4) présente un rebord circulaire (41), **caractérisé en ce que** le repli (314) de la partie périphérique (311) est conformé pour permettre à la partie centrale (312) d'accueillir, dans la zone de recouvrement (313), le rebord (41) de la cloison mobile.

5. Dispositif de freinage suivant l'une quelconque des revendications 1 et 2, **caractérisé en ce que** le diamètre (D2) de la partie centrale (312) est au plus égal à la moitié du diamètre (D1) de la partie périphérique (311).

6. Dispositif de freinage suivant la revendication 5, **caractérisé en ce que** la partie centrale (312) et la partie périphérique (311) présentent des première et seconde épaisseurs respectives (E2, E1) différentes, dont la première est supérieure à la seconde.

## Claims

1. Braking device composed of a master cylinder (1) and of a pneumatic booster (2), the booster especially comprising: a rigid casing (3); a moving partition (4) delimiting at least one front chamber (5) and one rear chamber (6), in a leaktight fashion, within the casing; a three-way valve (7) which can be operated by a control rod (8) in order selectively to allow different pressures into the front and rear chambers and correspondingly subject the moving partition to a boost force which acts in a first axial direction (X) pointing towards the master cylinder (1); and a push rod (9) connected to the moving partition for operating the master cylinder, the casing comprising a front shell (31) secured to the master cylinder and forming a wall for the front chamber, and a rear shell (32) forming a wall for the rear chamber, **characterized in that** the front shell (31) comprises a peripheral part (311) of larger relative diameter (D1) secured to the rear shell (32), and a central part (312) of smaller relative diameter (D2) secured to the master cylinder (1), and **in that** the peripheral part (311) and the central part (312) overlap in an annular overlap region (313), and **in that** in the overlap region the peripheral part (311) is at least locally further forward than the central part (312) in the first axial direction (X).

2. Braking device according to Claim 1, **characterized in that** the central part (312) and the peripheral part (311) are locally secured to each other in a non-uniform manner in the overlap region (313).

3. Braking device according to either one of Claims 1 and 2, **characterized in that**, in the overlap region (313), the central part (312) is fitted into a fold (314) in the peripheral part (311).

4. Braking device according to Claim 3, in which the moving partition (4) has a circular rim (41), **characterized in that** the fold (314) in the peripheral part (311) is shaped in such a way as to allow the central part (312) in the overlap region (313) to accommodate the rim (41) of the moving partition.

5. Braking device according to either one of Claims 1 and 2, **characterized in that** the diameter (D2) of the central part (312) is at most equal to half the diameter (D1) of the peripheral part (311).

6. Braking device according to Claim 5, **characterized in that** the central part (312) and the peripheral part (311) have different respective first and second thicknesses (E2, E1), the first of which is greater than the second.

## Patentansprüche

1. Bremsvorrichtung, die aus einem Hauptzylinder (1) und einem pneumatischen Servomotor (2) zur Unterstützung besteht, wobei der Servomotor insbesondere ein starres Gehäuse (3) aufweist, eine bewegliche Wand (4), die innerhalb des Gehäuses mindestens eine vordere Kammer (5) und eine hintere Kammer (6) in dichter Weise abgrenzt, ein Dreiwegeventil (7), das über eine Steuerstange (8) betätigt werden kann, um wahlweise unterschiedliche Drücke in der vorderen und in der hinteren Kammer zuzulassen und entsprechend die bewegliche Wand einer Unterstützungskraft auszusetzen, welche entlang einer ersten Axialrichtung (X) wirkt, die zum Hauptzylinder (1) gerichtet ist, und eine Schubstange (9), die mit der beweglichen Wand verbunden ist, um den Hauptzylinder zu betätigen, wobei das Gehäuse eine vordere Schale (31) aufweist, die mit dem Hauptzylinder fest verbunden ist und eine Wand fiir die vordere Kammer bildet, und eine hintere Schale (32), die eine Wand für die hintere Kammer bildet, **dadurch gekennzeichnet, dass** die vordere Schale (31) einen Umfangsabschnitt (311) aufweist, der einen größeren Relativdurchmesser (D1) besitzt und mit der hinteren Schale (32) fest verbunden wurde, und einen mittleren Abschnitt (312), der einen kleineren Relativdurchmesser (D2) besitzt und mit dem Hauptzylinder (1) fest verbunden wurde, dass der Umfangsabschnitt (311) und der mittlere Abschnitt (312) sich in einem ringförmigen Überlappungsbereich (313) überlappen und dass in dem Überlappungsbereich der Umfangsabschnitt (311) entlang der ersten Axialrichtung (X) zumindest lokal weiter vorgeschoben ist als der mittlere Abschnitt (312).

2. Bremsvorrichtung nach Anspruch 1, **dadurch gekennzeichnet, dass** der mittlere Abschnitt (312) und der Umfangsabschnitt (311) lokal und ungleichmäßig im Überlappungsbereich (313) fest miteinander verbunden wurden.

3. Bremsvorrichtung nach Anspruch 1 oder 2, **dadurch gekennzeichnet, dass** im Überlappungsbereich (313) der mittlere Abschnitt (312) in eine Falte (314) des Umfangsabschnitts (311) eingefügt ist.

4. Bremsvorrichtung nach Anspruch 3, bei der die bewegliche Wand (4) einen kreisförmigen Rand (41) aufweist, **dadurch gekennzeichnet, dass** die Falte (314) des Umfangsabschnitts (311) so ausgebildet ist, dass der mittlere Abschnitt (312) im Überlappungsbereich (313) den Rand (41) der beweglichen Wand aufnehmen kann.

5. Bremsvorrichtung nach Anspruch 1 oder 2, **dadurch gekennzeichnet, dass** der Durchmesser (D2) des mittleren Abschnitts (312) höchstens der Hälfte des Durchmessers (D1) des Umfangsabschnitts (311) entspricht.

6. Bremsvorrichtung nach Anspruch 5, **dadurch gekennzeichnet, dass** der mittlere Abschnitt (312) und der Umfangsabschnitt (311) eine erste bzw. eine zweite Stärke (E2, E1) aufweisen, die unterschiedlich sind, wobei die erste Stärke größer ist als die zweite.
